**Europäisches Patentamt**

**European Patent Office**

**Office européen des brevets**

(19)

(11) Veröffentlichungsnummer : **0 485 850 B1**

(12) # EUROPÄISCHE PATENTSCHRIFT

(45) Veröffentlichungstag der Patentschrift :
**19.07.95 Patentblatt 95/29**

(51) Int. Cl.$^6$ : **G01M 11/00**

(21) Anmeldenummer : **91118785.4**

(22) Anmeldetag : **04.11.91**

(54) **Verfahren und Einrichtung zur Messung der Dämpfung eines optisches Mediums.**

(30) Priorität : **13.11.90 DE 4036074**

(43) Veröffentlichungstag der Anmeldung :
**20.05.92 Patentblatt 92/21**

(45) Bekanntmachung des Hinweises auf die
Patenterteilung :
**19.07.95 Patentblatt 95/29**

(84) Benannte Vertragsstaaten :
**AT BE CH DE FR GB IT LI NL SE**

(56) Entgegenhaltungen :
**DE-A- 3 828 604**
**US-A- 4 652 123**

(73) Patentinhaber : **SIEMENS
AKTIENGESELLSCHAFT
Wittelsbacherplatz 2
D-80333 München (DE)**

(72) Erfinder : **Lieber, Winfried, Dr. Dipl.-Ing.
Alpenstrasse 21
W-8033 Krailling (DE)**
Erfinder : **Rügenberg, Gervin, Dipl.-Ing.
Krüner Strasse 100 B
W-8000 München 70 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Messung der optischen Dämpfung eines optischen Mediums unter Verwendung zweier Meßsender und zweier Empfänger, die beiderseits des optischen Mediums angeordnet sind, wobei die Meßsender und die Empfänger an jeweils einen Lichtwellenleiter angekoppelt werden und Messungen von beiden Seiten des optischen Mediums her durchgeführt werden, wobei jeweils nur ein Empfänger angekoppelt wird und dabei der jeweils andere Empfänger nicht an gekoppelt ist, wobei die beiden Meßsender aktiviert werden und eine erste Messung mit dem jeweils angekoppelten Empfänger ausgeführt wird, wobei anschließend der bisher angekoppelte Empfänger abgekoppelt und der andere Empfänger angekoppelt wird und eine zweite Messung ausgeführt wird, die von den Sendesignalen der beiden Meßsender hergeleitet ist.

Meßverfahren, bei denen Biegekoppler verwendet werden, sind z.B. in der DE-OS 38 28 604 und in der US-PS 4 652 123 beschrieben. Wie dort im einzelnen dargelegt wird, lassen sich besonders exakte Ergebnisse dann erzielen, wenn mit zwei Sendern und zwei Empfängern gearbeitet wird und aufeinanderfolgend mehrere Messungen ausgehend von beiden Seiten des Meßobjektes durchgeführt werden.

Im einzelnen werden dort jeweils folgende Messungen durchgeführt: Beidseitig eines optischen Mediums, wie z.B. einer Spleißstelle, ist jeweils ein erster und ein zweiter opti scher Sender an einem Lichtwellenleiter angekoppelt. Zwischen der Spleißstelle und z.B. dem zweiten Sender ist für eine erste Messung ein erster Empfänger angekoppelt. Bei Aktivierung des jeweiligen Senders wird vom Empfänger jeweils nur ein einzelner Meßwert erfaßt. Dieser Empfänger wird abgekoppelt und ein zweiter Empfänger auf der anderen Seite des optischen Mediums zwischen dem ersten Sender und dem optischen Medium angekoppelt. Für eine zweite Messung werden jeweils wieder die beiden Sender auf beiden Seiten des optischen Mediums aktiviert und dabei mit dem zweiten Empfänger wiederum jeweils nur ein einzelner Meßwert erfaßt.

Diesen und allen ähnlichen Meßverfahren liegt das Meßprinzip zugrunde, daß die Ankopplung des/der Empfänger und des/der Sender mittels mindestens eines sogenannten Biegekopplers erfolgt, bei dem der Lichtwellenleiter im Meßbereich eine Verformung erfährt. Beim Empfänger wird das im Verformungsbereich austretende Licht erfaßt und in der Meßeinrichtung zur Auswertung bereitgestellt. Das Licht wird von einem fest angeordneten Lichtempfänger, z.B. einem Fotodetektor, aufgenommen und zur Auswertung bereitgestellt. Beim Sender befindet sich der verformte Bereich des Lichtwellenleiters im Strahlungsfeld einer Lichtquelle. Die Menge des ein- bzw. ausgekoppelten Lichtes hängt zum einen von der räumlichen Zuordnung des im Koppelbereich gebogen verlaufenden Lichtwellenleiters zu dem Lichtempfänger ab, zum anderen von den Brechzahlverhältnissen und der Geometrie der optischen Grenzflächen im Biegekoppler, sofern keine Brechzahlanpassung (durch Immersion oder elastisches Material) erfolgt. An und für sich ist das Meßgerät sofort nach der mechanischen Betätigung des Biegekopplers, z.B. nach dem Schließen eines Deckels, betriebsbereit und es könnte sogleich mit den Messungen begonnen werden.

Es hat sich aber gezeigt, daß um so ungenauere Werte erhalten werden, je früher nach dem Biegen des Lichtwellenleiters in die Koppelposition gemessen wird. Untersuchungen haben zu dem Ergebnis geführt, daß sich offenbar eine zeitliche Veränderung des Ein- bzw. Auskoppelwirkungsgrades ergibt, und zwar dadurch, daß es bei der Beschichtung der Lichtwellenleiter unter dem Druck des die mechanische Biegung des Lichtwellenleiters bewirkenden Elementes (z.B. eines Dornes, eines Biegebalkens oder dergleichen) zu einer Verformung, z.B. einem Fließen der Beschichtung (Coating) des Lichtwellenleiters kommt und daß diese, wenn auch geringfügige, mechanische Veränderung zum einen die Lage des verformten Bereichs zur Lichtquelle bzw. zum Lichtempfänger verändert, zum anderen die Geometrie der optischen Grenzfläche beeinflußt. Man könnte derartige Fehlereinflüsse zwar dadurch beseitigen, daß so lange gewartet wird, bis die Verformung der Beschichtung aufgehört hat, weil dann der Endzustand des Strahlungsfeldes in Richtung auf den Fotodetektor erreicht ist und eine zeitliche Änderung der Meßsignale bei konstantem Sendesignal nicht mehr festgestellt werden kann.

Der Erfindung liegt die Aufgabe zugrunde, ein Verfahren der eingangs genannten Art so weiterzubilden, daß das gewünschte Meßergebnis möglichst genau und zuverlässig erhalten werden kann. Gemäß der Erfindung wird diese Aufgabe bei dem Verfahren der eingangs genannten Art dadurch gelöst, daß zur Verringerung des Einflusses nichtlinearer Vorgänge auf die Meßgenauigkeit für die erste Messung der zeitliche Verlauf des Empfangspegels der empfangenen Signale der beiden Meßsender durch die Bildung jeweils einer ersten Meßreihe von aufeinanderfolgenden Meßwerten innerhalb kurzer zeitlicher Abstände während einer ersten Meßzeit erfaßt wird, daß für die zweite Messung der zeitliche Verlauf des Empfangspegels der empfangenen Signale der beiden Meßsender durch Bildung jeweils einer zweiten Meßreihe von aufeinanderfolgenden Meßwerten innerhalb kurzer zeitlicher Abstände während einer zweiten Meßzeit erfaßt wird, und daß für die Dämpfungsberechnung diese Meßreihen von aufeinanderfolgenden Meßwerten herangezogen werden.

Da jeweils ein Empfänger für eine bestimmte Zeit angekoppelt bleibt und in dieser Zeit Sendesignale von beiden Meßsendern her eingespeist und daraus Meßwerte jeweils einer Meßreihe gewonnen werden, d.h. jeweils der zeitliche Verlauf des jeweiligen Empfangspegels der empfangenen Meßsignale der beiden Meßsender durch die Bildung jeweils einer Meßreihe von aufeinanderfolgenden Meßwerten innerhalb kurzer Zeitabstände innerhalb einer Meßzeit erfaßt wird, ist der Einfluß durch nichtlineare Vorgänge, insbesondere aus dem Fließen des Coatings, auf die Meßgenauigkeit bereits im erheblichen Maße verringert. Es wird also pro Meßzeit eine Vielzahl von Meßwerten gewonnen, d.h. eine zeitliche Verfolgung des jeweiligen Empfangspegels durchgeführt. Dadurch ist eine Empfangspegelmessung mit hoher zeitlicher Auflösung bereitgestellt, die eine Meßdatenerfassung bei sich zeitlich ändernden Meßbedingungen ermöglicht. So ist es z.B. auf diese Weise möglich, mit der Messung bereits unmittelbar nach dem Schließen der Koppeleinrichtung, also bei Verformung des jeweiligen Lichtwellenleiters, zu beginnen, obwohl in diesem Zustand der Fließvorgang des Coatings noch keinesfalls abge schlossen ist. Andernfalls müßte für eine genaue Messung abgewartet werden, bis das Coating seinen End-Fließzustand erreicht hat. Die Erfindung zeichnet sich also dadurch aus, daß sehr schnell gemessen werden kann und relativ genaue Ergebnisse erzielbar sind.

Die Erfindung hat zudem den Vorteil, daß sie auch andere nichtlineare Vorgänge, z.B. Einschwingverhalten, Temperaturgänge der Meßeinrichtung usw. ebenfalls in ihrer Auswirkung auf die Meßgenauigkeit stark eingeschränkt bzw. weitgehend kompensiert.

Die jeweilige Meßzeit für aufeinanderfolgende Meßwerte je Meßreihe kann insbesondere sehr kurz gehalten werden, z.B. unter 20 sec, vorzugsweise unter 10 sec. Der zeitliche Abstand zweier Meßwerte liegt unter 2 sec, vorzugsweise unter 1 sec.

Eine bevorzugte Weiterbildung der Erfindung ist dadurch gekennzeichnet, daß die beiden Meßsender jeweils abwechselnd aktiviert werden und zwar derart, daß innerhalb einer Meßreihe zeitlich verschachtelt Meßsignale des einen und des anderen Senders erhalten werden. Dies hat den Vorteil, daß eine quasi-gleichzeitige bzw. dieser Gleichzeitigkeit sehr stark angenäherte Messung wegen der engen zeitlichen Nachbarschaft der empfangenen Meßsignale der beiden Meßsender erzielt wird. Innerhalb derartiger kurzer Zeitspannen, etwa in der Größenordnung von 1 sec oder weniger, in denen aufeinanderfolgend mit jeweils dem einen und dann dem anderen Meßsender gemessen wird, ist der Fließvorgang des Coatings nur geringfügig fortgeschritten, so daß, wenn diese beiden zeitlich benach barten, von den verschiedenen Meßsendern, stammenden Meßwerte miteinander in Beziehung gesetzt werden, der Einfluß der nichtlinearen Fließvorgänge praktisch vernachlässigbar bleibt.

Eine besonders vorteilhafte Weiterbildung der Erfindung besteht darin, daß aus zwei aufeinanderfolgenden Meßwerten einer Meßreihe, die jeweils auf einen Sender zurückgehen, ein neuer Meßwert durch Interpolation gebildet wird und daß dieser durch Interpolation gefundene Meßwert für die Berechnung der Dämpfung dem zeitlich zwischen den beiden erstgenannten Meßwerten gewonnene Meßwert des jeweils anderen Senders zugeordnet wird. Auf diese Weise wird ein synthetischer Meßwert erzeugt, dessen Amplitudenwert fast exakt demjenigen Wert entspricht, der aus einer jeweils völlig gleichzeitigen Messung mit beiden Meßsendern gewonnen werden könnte. Der Fehler ist lediglich durch die Differenz bestimmt, den die Kurvenkrümmung verglichen mit der geradlinigen Interpolation bietet. Dies ist bei den kurzen Zeitabständen mit denen gemessen wird aber weitgehend belanglos.

Die Erfindung betrifft weiterhin eine Einrichtung zur Durchführung des erfindungsgemäßen Verfahrens, welche dadurch gekennzeichnet ist, daß den Meßsendern und Empfängern Schaltungselemente derart zugeordnet sind, daß den Meßsendern und Empfängern Schaltungselemente derart zugeordnet sind, daß im Betrieb zur Verringerung des Einflusses nichtlinearer Vorgänge auf die Meßgenauigkeit für die erste Messung der zeitliche Verlauf des Empfangspegels der empfangenen Signale der beiden Meßsender durch die Bildung jeweils einer ersten Meßreihe von aufeinanderfolgenden Meßwerten innerhalb kurzer zeitlicher Abstände während einer ersten Meßzeit von dem jeweils einen angekoppelten Empfänger erfaßt wird, daß für die zweite Messung der zeitliche Verlauf des Empfangspegels der empfangenen Signale der beiden Meßsender durch Bildung jeweils einer zweiten Meßreihe von aufeinanderfolgenden Meßwerten innerhalb kurzer zeitlicher Abstände während einer zweiten Meßzeit von dem zweiten Empfänger erfaßt wird, und daß für die Dämpfungsberechnung diese Meßreihen von aufeinanderfolgenden Meßwerten herangezogen werden.

Sonstige Weiterbildungen der Erfindung sind in den abhänigen Ansprüchen widergegeben.

Die Erfindung und ihre Weiterbildungen werden nachfolgend anhand von Zeichnungen näher erläutert. Es zeigen

Fig. 1     im Blockschaltbild ein Ausführungsbeispiel einer Einrichtung zur Durchführung des erfindungsgemäßen Verfahrens,

Fig. 2     die Verteilung des Coatings eines Lichtwellenleiters vor dem Fließvorgang,

Fig. 3     die Verteilung des Lichtwellenleiter-Coatings nach dem Fließvorgang,

Fig. 4     die Zeitfunktion der ausgekoppelten Leistung eines Empfängers in Abhängigkeit vom Fließvorgang,

Fig. 5     die Gewinnung zweier Meßreihen unter Zugrundelegung zweier nichtlinearer Fließkurven und

Fig. 6     die Gewinnung zeitlich verschachtelter Meßreihen bzw. Meßwerte aus zwei Fließkurven analog zu Fig. 5.

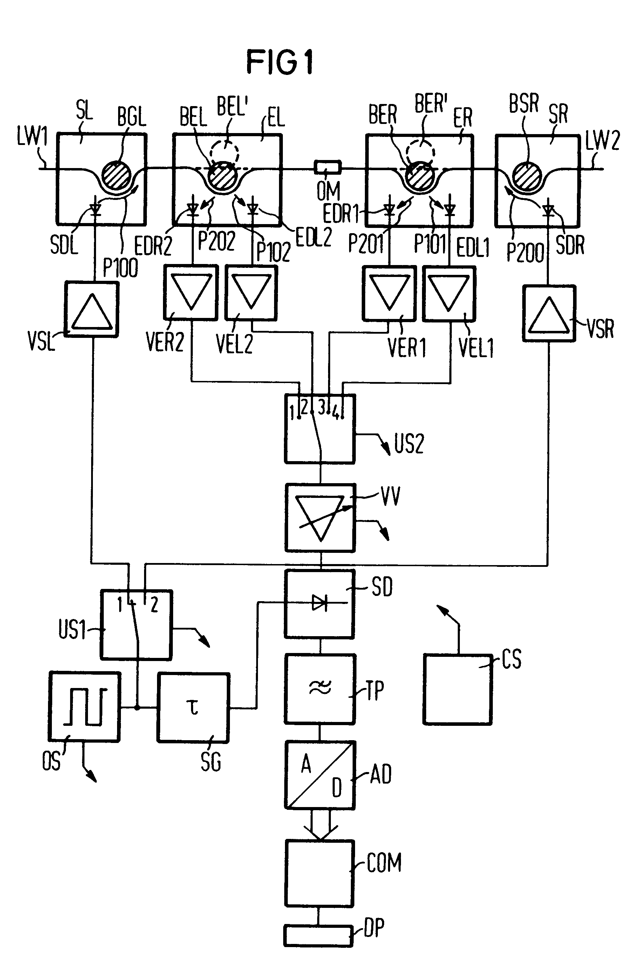

In Figur 1 ist in schematischer Darstellung ein Ausführungsbeispiel einer Meßeinrichtung gezeichnet, welche zur Durchführung des erfindungsgemäßen Verfahrens dient. Ein zu messendes optisches Medium OM, zum Beispiel eine Spleißstelle, ein Lichtwellenleiterstück größerer Länge, ein optisches Kabel oder dergleichen ist links und rechts mit zwei Lichtwellenleitern LW1 und LW2 verbunden. Links vom optischen Medium ist ein optischer Sender SL vorgesehen, dessen Sendediode mit SDL bezeichnet ist. Korrespondierend hierzu ist auf der rechten Seite ein optischer Sender SR vorhanden, dessen Sendediode mit SDR bezeichnet ist. Weiterhin ist auf der linken Seite ein optischer Empfänger EL vorhanden, der zwei Empfangsdioden EDR2 und EDL2 aufweist. Korrespondierend hierzu befindet sich auf der rechten Seite des optischen Mediums OM ein weiterer optischer Empfänger ER, dessen Photodioden mit EDL1 und EDR1 bezeichnet sind. Die Ankopplung der beiden Sender SL und SR und der beiden Empfänger EL und ER erfolgt jeweils über Biegekoppler, die schematisch durch einen Biegedorn dargestellt sind, der beim Sender SL mit BSL, beim Empfänger EL mit BEL, beim Empfänger ER mit BER und beim Sender SR mit BSR bezeichnet ist. Einzelheiten über die Art der Durchführung der Kopplung sind beispielsweise in der deutschen Offenlegungsschrift 38 28 604 näher beschrieben. Dort ist auch ausgeführt, daß, ausgehend von dem in den Lichtwellenleiter LW1 eingespeisten Sendesignal des optischen Senders SL, folgende Meßwerte gewonnen werden können:

Meßwert P102 durch die Empfangsdiode EDL2
Meßwert P101 durch die Empfangsdiode EDL1.

Aus dem vom optischen Sender SR rechts vom optischen Meßobjekt OM in den Lichtwellenleiter LW2 eingekoppelten Sendesignal lassen sich folgende Meßwerte gewinnen:

Meßwert P202 durch die Empfangsdiode EDR2
Meßwert P201 durch die Photodiode EDR1.

Die Dämpfung a des optischen Mediums OM ist dann proportional

$$a : \sqrt{\frac{P202 \cdot P101}{P102 \cdot P201}}$$

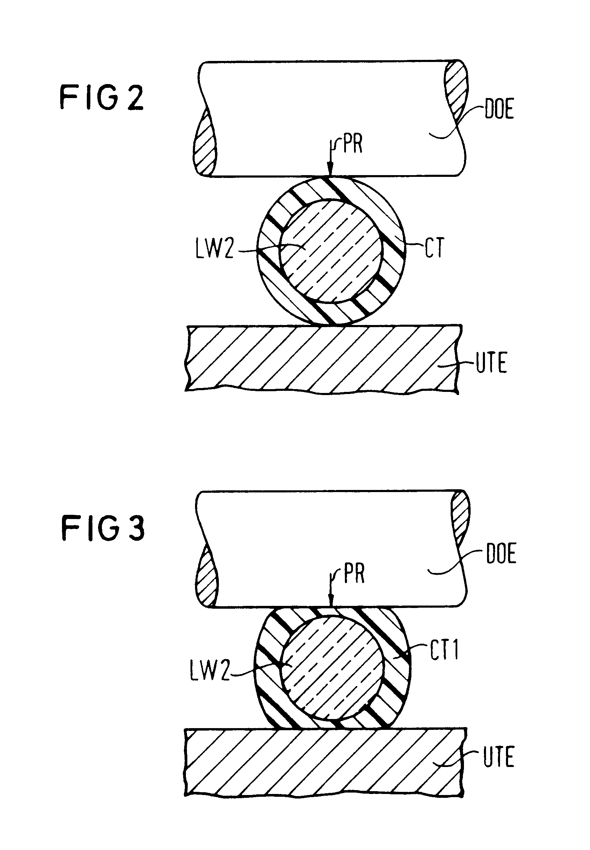

Im Bereich der Biegekoppler BSL, BEL, BER und BSR nach Figur 1 muß der jeweilige Lichtwellenleiter LW1 bzw. LW2 mit einem hinreichend großen Anpreßdruck PR gegen die Unterlage gedrückt werden, um eine definierte Lage im Koppelbereich sicherzustellen. Dies ist in Figur 2 dargestellt, wobei davon ausgegangen wird, daß hier die Verhältnisse im Bereich des Empfängers ER dargestellt sind. Der Lichtwellenleiter LW2 ist in einer gegenüber Figur 1 um 90° gedrehten Position gezeichnet. Er wird dort durch einen Dorn DOE gegen das Unterteil UTE gedrückt, wobei der Dorn DOE gerade die Oberfläche der Beschichtung (coating) CT des Lichtwellenleiters LW2 berührt. Das durch die Biegung aus dem Lichtwellenleiter LW2 austretende Licht wird von den beiden Empfangsdioden EDR1 (von rechts kommend) und EDL1 (von links kommend) aufgenommen. Diese beiden Photodioden EDR1 und EDL1 sind raumfest im Koppelbereich angeordnet und so dimensioniert und ausgerichtet, daß sie möglichst viel des austretenden Lichts aufnehmen. Die Optimierung der lichtempfindlichen Empfangseinrichtung bei den Empfängern ER und EL ist somit auf den Endzustand ausgelegt, das heißt in einem Übergangsbereich in dem die Verformung der Beschichtung des Lichtwellenleiters noch nicht abgeschlossen ist, wird weniger Licht aufgenommen als im Endzustand.

Da ein ausreichend großer Druck PR ausgeübt werden muß, kommt es unter einer etwas länger dauernden Einwirkung des Dornes DOE zu einem Fließen bzw. einer Verformung der Beschichtung CT, die im Endzustand die in Figur 3 dargestellte Verteilung annimmt. Dort ist oben und unten ein Teil des Coating-Materials abgewandert, und zwar in den freien Bereich (Spaltbereich) zwischen dem Dorn DOE und dem Unterteil UTE) hineingedrückt worden. Insgesamt ergibt sich also die mit CT1 bezeichnete ungleichmäßige Verteilung des Beschichtungsmaterials. Obwohl zur Erläuterung hier nur auf die Ankopplung beim Empfänger ER Bezug genommen wird, gelten die gleichen Überlegungen natürlich auch für die Ankopplung des Empfängers EL sowie der Sender SL und SR.

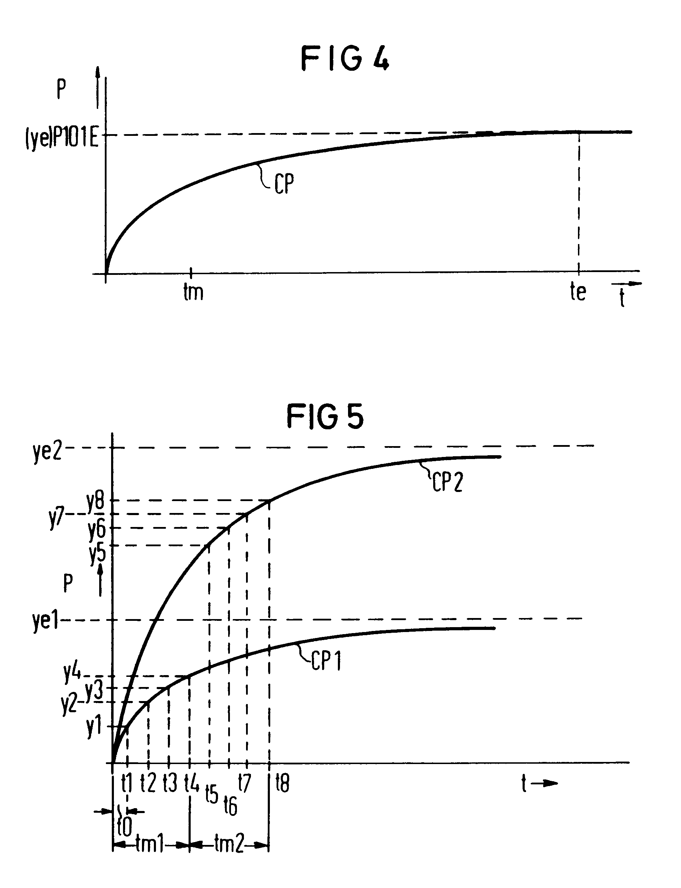

Die Verformung des Coatings erfolgt nach einer e-Funktion CP entsprechend Figur 4. Exakte Messungen im Endzustand könnten also erst durchgeführt werden, wenn die Beschichtung den mit ye bezeichneten Endzustand nach Figur 3 erreicht hat, was bei derzeit gebräuchlichen Coatings etwa in der Größenordnung von 1 Minute bis 5 Minuten dauert. Diese Zeit ist in Figur 4 mit te bezeichnet.

Um zu vermeiden, daß solange gewartet werden muß, und daß eventuell sogar faserspezifische Totzeiten eingehalten werden müssen, wird bei der Erfindung unmittelbar nach dem Schließen der Biegekoppler, das heißt nach dem Eindrücken des Dornes DOE in das Unterteil UTE mit der Messung begonnen, wobei der zeitliche Verlauf des Empfangspegels erfaßt wird durch die Bildung einer Meßreihe von aufeinanderfolgenden Meßpunkten innerhalb kurzer Abstände.

Für die Aufbereitung der Sendesignale und die Auswertung der Empfangssignale dienen die im unteren Teil der Figur 1 als Blockschaltbilder angegebenen Schaltungselemente Im einzelnen ist hier ein Oszillator (Taktgeber) OS dargestellt, der das Ansteuersignal für die Sendedioden-Treiber VSL und VSR liefert. Hierzu ist ein Umschalter US1 vorgesehen, der wahlweise das Taktsignal dem Sendetreiber VSL des linken Senders SL und VSR des rechten Senders SR zuführt. Der Umschalter US wird von einem zentralen Steuerelement CS angesteuert, das zweckmäßig mit dem Takt des Taktgebers OS synchronisiert ist bzw. diesen synchronisiert (hier, wie bei den anderen Schaltungsteilen US1 und US2 durch einen Pfeil angedeutet).

Wenn der Betrieb der Sendedioden SDL und SDR mit Gleichlicht erfolgt, kann der Oszillator OS entfallen. Die Sendedioden-Treiberstufen VSL und VSR steuern die Sendedioden SDL und SDR an, wobei bei Verwendung von Laserdioden die Treiberschaltung deren Sendeleistung regelt. Als Sendedioden SDL und SDR können zum Beispiel 1300 nm-Leuchtdioden verwendet werden. Die Sendeleistung ist in gewissem Umfang temperaturabhängig und deshalb wegen der Verlustleistung der Dioden auch zeitabhängig. Wenn für SDL und SDR Laserdioden verwendet werden, die eine eingebaute Monitordiode enthalten, kann durch eine Leistungsregelung diese Zeitabhängigkeit auf der Senderseite durch eine entsprechende Aussteuerung kompensiert werden.

Auf der Empfangsseite ist jeder der Empfangsdioden EDR2, EDL2, EDR1, EDL1 jeweils ein eigener Vorverstärker VER2, VEL2, VER1 und VEL1 nachgeschaltet, der zweckmäßig so nah wie möglich bei der jeweiligen Empfangsdiode angeordnet wird. Über den Umschalter US2 werden nacheinander in einer bestimmten Reihenfolge die einzelnen Vorverstärker VER2 bis VEL2 an den Signal-Auswerteteil angeschlossen. Es ist auch möglich, nur einen einzigen gemeinsamen Verstärker vorzusehen anstelle der vielen einzelnen Vorverstärker VER2 bis VEL2, wobei dieser dann nach dem Umschalter US2 anzuordnen wäre.

Es ist auch möglich, jeweils zwei Empfangsdioden, also zum Beispiel EDR2 und EDL2 der Empfangseinrichtung EDL parallel auf einen gemeinsamen Verstärker zu schalten und ebenso für die beiden Empfangsdioden EDR1 und EDL1 nur einen gemeinsamen Vorverstärker vorzusehen und diese parallel auf diesen Vorverstärker zu schalten. Die Anordnung einzelner Verstärker und deren Zuordnung möglichst nahe zu der jeweiligen Empfangsdiode hat aber den Vorteil, daß besonders geringe Übertragungswege erforderlich sind und damit die Dämpfung niedrig gehalten werden kann. Außerdem lassen sich gegebenenfalls Unterschiede in den Eigenschaften der einzelnen Empfangsdioden EDR2 bis EDL1 durch eine entsprechende Einstellung des Verstärkungsfaktors des jeweiligen Vorverstärkers kompensieren. Die Verstärkungsfaktoren der Verstärker VER2 bis VEL1 sind - gegebenenfalls nach Abgleichvorgängen - auf feste Werte eingestellt.

Nach dem Umschalter US2 ist ein Verstärker VV mit variablem Verstärkungsfaktor vorgesehen. Dieser dient dazu, den optischen Dynamikbereich des Meßgerätes zu verbessern, weil die Empfangspegel je nach Fasereigenschaften sehr unterschiedlich sein können. Falls die Dynamik der Schaltung ausreicht oder sie anderweitig, beispielsweise durch eine definiert veränderbare Sendeleistung erhöht werden kann, könnte auch ein fester gemeinsamer Verstärker anstelle des einstellbaren Verstärkers VV verwendet werden.

Dem einstellbaren Vorverstärker VV ist ein Synchrongleichrichter SD nachgeschaltet. Dies ist deshalb zweckmäßig, weil zur Vermeidung von Problemen mit Fremdlicht, Dunkelströmen und Drift vorteilhaft ein moduliertes Sendesignal verwendet wird. Diese Signaldetektion durch einen phasensensitiven Gleichrichter (Synchrongleichrichter) bewirkt eine optimale Störunterdrückung, so daß eine sehr hohe Empfindlichkeit erzielt wird. Der Synchrongleichrichter SD wird vom Taktgeber OS aus angesteuert und zwar über ein Verzögerungsglied (Phasenschieber) SG. Die so erzeugte Phasenverschiebung dient der Kompensation der Signallaufzeit.

Die Signaldetektion kann auch durch andere Verfahren zum Beispiel Bandpaßfilerung mit anschließender Präszisionsgleichrichtung erfolgen. Bei hinreichend hohem Empfangspegel kannt auch mit unmoduliertem Licht ("Gleichlicht") gearbeitet werden.

Das nachfolgende Tiefpaßfilter TP dient zur Unterdrückung der Modulation des Sendesignals. Sofern der nachfolgende Analog/Digitalwandler AD ein integrierender Wandler ist, kann gegebenenfalls ein eigenes Tiefpaßfilter TP entfallen. Der Analog/Digitalwandler AD setzt das analoge Signal für die Brechnung der Meßergebnisse (Dämpfung) in ein Digitalsignal um.

Die jeweiligen digitalisierten Meßsignale werden einer Recheneinheit COM zugeführt, welche das resultierende Meßergebnis ermittelt und in einer für die weitere Verarbeitung geeigneten Weise bereitstellt, beispielsweise für die Anzeige auf einem Anzeigegerät DP oder für das Ausdrucken auf einem Registrierstreifen.

a) Erste Meßreihe

Die erste Meßreihe beginnt mit der Aktivierung des linken Senders SL, also durch Einkopplung des Meßsignals P100 in den Lichtwellenleiter LW1. Der Umschalter US1 hat somit die in Fig. 1 gezeigte Position und liegt auf dem Kontakt 1. Der erste Lichtimpuls gelangt (ohne Dämpfung durch den Empfänger EL, weil der Biegekoppler in der mit BEL′ bezeichneten gestrichelten Position ist und der Lichtwellenleiter LW1 gerade durchläuft wie gestrichelt angedeutet) zu dem optischen Meßobjekt OM. Das durch OM gedämpfte Signal wird im Empfänger ER teilweise ausgekoppelt und zwar mit einem Signalpegel der mit P101 bezeichnet ist und zur Empfangsdiode EDL1 gelangt. In diesem Meßzustand muß der Umschalter US2 auf dem Kontakt 4 liegen, so daß der so erhaltene Meßwert zur Auswertung den dem Umschalter US2 nachfolgenden Schaltungsteilen zugeführt werden kann.

Es ist möglich, eine erste Meßfolge nur mit angeschaltetem Sender SL und dann eine weitere Folge nur mit aktiviertem Sender SR zu erzeugen, wie später unter 1) dargelegt wird. Bessere Ergebnisse lassen sich erzielen, wenn zeitlich verschachtelt gemessen wird, wie später unter 2) beschrieben wird. Dieser Meßfall ist der nachfolgenden Beschreibung zugrundegelegt.

Dabei wird anschließend der Schalter US1 umgelegt und der nächste Impuls des Taktgebers OS aktiviert den rechten Sender SR und die Sendediode SDR koppelt das Meßsignal P200 in den Lichtwellenleiter LW2 ein. Dieses Lichtsignal wird von der Koppeleinrichtung BER teilweise ausgekoppelt und gelangt als Meßsignal P201 zur Empfangsdiode EDR1. Dementsprechend muß in diesem Zustand der Umschalter US2 auf dem Schaltkontakt 3 liegen. In der beschriebenen Reihenfolge werden durch aufeinanderfolgendes Aktivieren des linken Senders SL und des rechten Senders SR eine erste Meßreihe mit aufeinanderfolgenden Meßwerten P101 und P201 abwechselnd gewonnen. Somit steht eine zeitlich verschachtelte erste Meßreihe zur Verfügung, deren Einzelwerte jeweils abwechselnd vom linken Senders SL und vom rechten Senders SR abgeleitet sind. Die Messung erfolgt noch im Fließbereich (bis tm in Fig. 3), d.h. der Lichtwellenleiter LW2 hat noch nicht die in Fig. 3 gezeigt Endstellung erreicht.

Nach dem Abschluß der ersten Meßreihe mit dem angekoppelten Empfänger ER wird der Empfänger ER deaktiviert, was dadurch erreicht wird, daß der Biegebalken BER nach oben bewegt und so in die mit BER′ bezeichnete, gestrichelt dargestellte Position gebracht wird. Dadurch verläuft der Lichtwellenleiter LW2 wieder geradlinig und es werden keine Signale P101 oder P201 mehr ausgekoppelt. Dafür wird der linke Empfänger EL durch Bewegen des Biegebalkens BEL′ nach unten in die Position BEL aktiviert, d.h. der Lichtwellenleiter LW1 wird in die gebogene Position gebracht, so daß eine Auskopplung von Licht zu den Empfangsdioden EDR2 und EDL2 möglich ist.

b) Zweite Meßreihe

Der Umschalter US1 is zu Beginn in der in Fig. 1 gezeichneten Position, also mit dem Kontakt 1 verbunden, so daß durch den nächsten Rechteckimpuls die Sendediode SDL aktiviert wird und Licht über den Biegekoppler BSL in den Lichtwellenleiter LW1 einkoppelt. Der eingekoppelte Lichtimpuls, der sich auf dem Lichtwellenleiter ausbreitet ist mit P100 bezeichnet. Ein Teil dieses Lichtimpulses wird von dem linken Empfänger EL ausgekoppelt und ist mit P102 bezeichnet. Dieser Teil wird von der Empfangsdiode EDL2 aufgenommen. Die Steuerung des Umschalters US2 muß so erfolgen, daß unmittelbar nach der Aktivierung der Sendediode SDL und dem Einkoppeln des Sendeimpulses P100 der Umschalter US2 auf dem Kontakt 2 liegt, der am Ausgang des Verstärkers VEL2 angeschlossen ist. Mit dem nächsten Rechteckimpuls des Taktgebers US wird der rechte Sender SR aktiviert, wozu der Schalter US1 auf den Kontakt 2 umgelegt sein muß. Dieses Umlegen erfolgt in der Taktpause vom ersten Rechteckimpuls des Oszillators OS zum zweiten Rechteckimpuls. Somit wird durch den zweiten Impuls des Taktgebers OS die Sendediode SDR des rechten Senders SR aktiviert und koppelt einen Lichtanteil P200 in den Lichtwellenleiter LW2 ein. Um eine Bedämpfung dieses Signals zu vermeiden, ist der Biegekoppler ER rechts vom optischen Medium OM nach oben bewegt, d.h. es findet hier keine Auskopplung von Lichtsignalanteilen statt. Diese Position ist gestrichelt angedeutet und mit BER′ bezeichnet. Der Lichtwellenleiter LW2 läuft also in diesem Zustand geradlinig durch. Somit gelangt das Sendesignal P200 des Senders SR über das optische Medium zum linken Empfänger EL, wo von der Empfangsdiode EDR2 ein Signalanteil P202 ausgekoppelt wird. Durch die inzwischen erfolgte Umschaltung des Umschalters US2 auf den Kontakt 1 kann das Signal P202 über den Vorverstärker VER2 der weiteren Auswerteschaltung beginnend mit dem Vorverstärker VV zugeführt werden. Der linke Empfänger EL bleibt über eine gewisse Meßzeitspanne in der dargestellten Koppelposition und es werden jeweils in der vorstehend beschriebenen Weise die beiden Sender SDL und SDR aufeinanderfolgend aktiviert und es wird so eine zweite Meßreihe erzeugt, von der jeweils die ungeradzahligen Meßwerte auf das Sendesignal P100 zurückgehen und Meßwerten P102 entsprechen, während die geradzahligen Meßwerte auf das Sendesignal P200 zurückgehen und Meßwerten P202 entsprechen. Der Umschalter US2 pendelt dabei stets zwischen den Kontakten 2 und 1 hin und her.

Diese Messungen werden noch während des linken gekrümmten Kurvenverlaufs von Fig. 4 durchgeführt, also noch lange vor Erreichen des Endwertes ye (z.B. P 101E), zur Zeit te. An sich wären derartige Meßwerte, die aus einer solchen Übergangszeit gewonnen werden für die Messung nicht brauchbar. Durch die verschachtelte Gewinnung der Meßwerte durch Messungen von rechts und von links und deren entsprechendes Inbeziehung-Setzen wird jedoch trotzdem bereits in dem Übergangsbereich, also innerhalb der relativ kurzen Meßzeit tm eine Folge von weitgehend exakten Meßwerten gewonnen, die als Gesamtergebnis ausgewertet werden können.

Die Erfindung wird nachfolgend anhand eines Zahlenbeispiels näher erläutert. Es gelten folgende Annahmen (nur zur Verdeutlichung):
- Die Sendeleistungen P100 und P200 sind konstant
- Der Empfangspegel folgt der in Fig. 4 dargestelltne Funktion CP

$$p(t) = \hat{p}(1 - e^{-\frac{t + t_o}{\tau}})$$

Dabei ist p (t) die zeitabhänigige Leistung
p       der stationäre Endwert (für t→∞ )
to     die Zeit, die vom Schließen des Empfangskopplers bis zum Beginn der Meßwertaufnahme vergangen ist.
t       die Zeit seit Beginn der Meßwertaufnahme (d.h. nach to)
$\tau$      die Zeitkonstante des Kriechverhaltens.

Die Zeit to ist vom Bediener abhängig, von den Eigenschaften des Kopplers und des jeweiligen Faserstücks. to und $\tau$ können von Messung zu Messung unterschiedlich sein.

Für die Berechnung der Dämpfung sind idealerweise die stationären Endwerte zu verwenden. Die Formel für die Dämpfungsberechnung lautet (vgl. DE-OS 38 28 604).

$$a = -10 \cdot \log \sqrt{\frac{P202 \cdot P101}{P102 \cdot P201}} \ (dB)$$

Wenn die stationären Endwerte bekannt wären, könnten diese z.B. lauten:
$\hat{P}202 = 0.45$      $\hat{P}101 = 0.50$
$\hat{P}102 = 1.00$      $\hat{P}201 = 0.90$

Dann ergäbe sich die exakte Dämpfung zu

$$a = -10 \cdot \log \sqrt{\frac{0.45 \cdot 0.50}{1.00 \cdot 0.90}} = 3.01 \ dB$$

Die Meßwerte für P101 und P201 werden mit dem gleichen Koppler (Empfänger ER, Koppler BER in Fig. 1) direkt nacheinander oder verschachtelt gemessen, anschließend die Meßwerte für P102 und P202 (Empfänger EL mit Koppler BEL). Für den ersten Meßvorgang (P101/P201) wird beispielsweise 1 = 1sec und für den zweiten = 2sec angenommen. to sei für beide Meßvorgänge gleich 3sec. Dann ergeben sich für die Leistungen folgende (berechneten) Funktionswerte

$$P101(t) = 0.5(1 - e^{-\frac{t + 3}{1}})$$

$$P102(t) = 1.0(1 - e^{-\frac{t + 3}{2}})$$

$$P201(t) = 0.9(1 - e^{-\frac{t + 3}{1}})$$

$$P202(t) = 0.45(1 - e^{-\frac{t + 3}{2}})$$

Dabei ist t die Zeit seit Beginn der Meßwertaufnahme.
Nachfolgend werden die verschiedenen Meßverfahren näher erläutert.

1.) <u>Messungen nacheinander und Mittelwertbildung:</u>

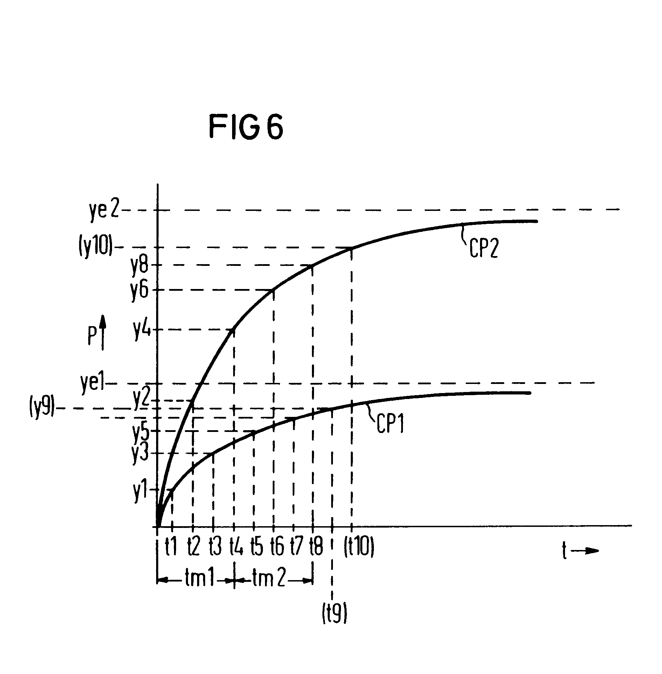

Zur Erhöhung der Genauigkeit (Rauschunterdrückung durch Mittelwertbildung) sollen jeweils 4 Meßwerte von jedem Sendersignal der Sender SR und SL (y1-y4 und y5-y8 in Fig. 5 als Pegelwerte P in Abhängigkeit von der Zeit t) aufgenommen werden.

Eine Meßwertaufnahme dauert beispielsweise 1s. Zur Vereinfachung ist bei der Darstellung die kurze Anlaufzeit to = 3 sec von t = 0 bis t1 nur mit der Dauer von einer Sekunde dargestellt.

Die erste Messung (Kurvenverlauf CP1, Endwert ye1, Signal vom Sender SL) mit den Meßwerten y1-y4 dauert eine Meßzeit tm1 = to+4 = 7 sec. Die zweite Messung (Kurvenverlauf CP2, Endwert ye2, Sendesignal vom Sender SR) mit den Meßwerten y5-y8 erfolgt anschließend. Auch bei der zweiten Messung (Kurve CP2) dauert die Meßzeit tm2 = 7 sec. bis die Meßwerte y5 bis y8 gewonnen sind. Die Messung erfolgt demnach so, daß zuerst nur mit dem Sendesignal P100 vom Sender SL vier Messungen (y1-y4) im Empfänger ER durchgeführt werden und dann mit dem Sendesignal P200 vom Sender SR die nächsten vier Messungen (y5-y8). Der Pegel der Meßwerte vom Sender SR (Meßwerte y5-y8) ist größer als der Pegel der Meßwerte vom Sender SL, weil beim letzteren die Dämpfung durch das Meßobjekt OM hinzukommt.

Dann ergeben sich folgende Meßwerte (Aufnahme mit ER) einer ersten Meßreihe, wobei in Klammer jeweils die Zeit t in sec nach dem Verstreichen von to angegeben ist.

```
    y1                y2                y3                y4
P101(0)=0.475   P101(1)=0.491   P101(2)=0.497   P101(3)=0.499


    y5                y6                y7                y8
P201(4)=0.899   P201(5)=0.900   P201(6)=0.900   P201(7)=0.900
```

Für die zweite Meßwertaufnahme (Aufnahme durch EL) ergeben sich Meßwerte einer zweiten Meßreihe.

P102(0)=0.777      P102(1)=0.865      P102(2)=0.918      P102(3)=0.950
P202(4)=0.436      P202(5)=0.442      P202(6)=0.445      P202(7)=0.447

Als Mittelwerte ergeben sich daraus:

$\overline{P101}$ = 0.491;      $\overline{P201}$ = 0.900      $\overline{P102}$ = 0.878      $\overline{P202}$ = 0.443

Hieraus ergibt sich eine Dämpfung von

$$a = -10 \cdot \log \sqrt{\frac{\overline{P202} \cdot \overline{P101}}{\overline{P102} \cdot \overline{P201}}} = 2.80 \text{ dB, d.h. Fehler} = 0.21 \text{ dB}$$

2.) Messung mit verschachtelter Meßwertaufnahme und Mittelwertbildung:

Hierbei werden alle ungeradzahligen Meßwerte y1-y7 entsprechend Fig. 6 vom Sendersignal P100 des linken Senders SL hergeleitet und alle geradzahligen Meßwerte y2-y8 vom rechten Meßsender. Diese erste Meßreihe wird wieder mit dem Empfänger ER aufgenommen und es wird zeitlich abwechseln (verschachtelt) jeweils das vom Meßsender SL und dann vom Meßsender SR her kommende Empfangssignal P101 bzw. P102 gemessen.

P101(0)=0.475      P101(2)=0.497      P101(4)=0.500      P101(6)=0.500
P201(1)=0.884      P201(3)=0.898      P201(5)=0.900      P201(7)=0.900

Als zweite Meßreihe mit dem Empfänger EL werden zeitlich verschachtelt erhalten die Meßwerte

P102(0)=0.777      P102(2)=0.918      P102(4)=0.970      P102(6)=0.990
P202(1)=0.389      P202(3)=0.428      P202(5)=0.442      P202(7)=0.447

Die Mittelwerte lauten: $\overline{P101}$ = 0.493      $\overline{P201}$ = 0.296      $\overline{P102}$ = 0.914      $\overline{P202}$ = 0.427 und die daraus berechnete Dämpfung:

$$a = 10 \cdot \log \sqrt{\frac{\overline{P202} \cdot \overline{P101}}{\overline{P102} \cdot \overline{P201}}} = 2.95 \text{ dB, d.h. Fehler} = 0.06 \text{ dB}$$

Der Meßfehler ist also gegenüber 1) bereits wesentlich geringer.

3.) Messung mit verschachtelter Meßwertaufnahme und Interpolation und Mittelwertbildung.

Die Messung erfolgt verschachtelt, wie unter 2.) beschrieben. Es wird lediglich je ein zusätzlicher Meßwert pro Meßwertaufnahme (d.h. pro Meßreihe) benötigt, also mit der Darstellung nach Fig. 6 die Meßwerte y9 und y10.

```
        y9                              y10
    P101(8) = 0.500        und      P102(8) = 0.996
```

Die anderen Meßwerte y1-y8 sind die gleichen wie bei 2.) Jetzt werden durch lineare Interpolation die Zwischenwerte von P101 (0) und P102 (3) usw. berechnet (also von jeweils aufeinanderfolgenden Meßwerten eines Senders - im folgenden Beispiel und zwar als

$$P(t) = \frac{p(t-1) + (t+1)}{2}$$

Diese neuen, errechneten Werte (gewonnen also von SL) der den Meßsignalen des Senders SL mit dem Empfänger SR der ersten Meßreihe sind mit P101(1), P101(3), P101(5) und P101(7) bezeichnet, weil diese Mittelwerte zeitlich mit den Werten P102(1), P102(3), P102(5) und P102(7) zusammenfallen bzw. zu ihnen korrespondieren.

Man erhält:

P101(1)=0.486      P101(3)=0.499      P101(5)=0.500      P101(7)=0.500
und
P102(1)=0.221      P102(3)=0.944      P102(5)=0.980      P102(7)=0.993

und daraus die Mittelwerte
$\overline{P101}=0.496$ und $\overline{P102}=0.935$

Die anderen beiden Mittelwerte sind wie bei 2.) angegeben. Damit ergibt sich.

a = 2.99 dB, d.h. der Fehler = 0.02 dB

Der Meßfehler ist also bei dieser Lösung am geringsten.

**Patentansprüche**

1. Verfahren zur Messung der optischen Dämpfung (a) eines optischen Mediums (OM) unter Verwendung zweier Meßsender (SL, SR) und zweier Empfänger (EL, ER), die beiderseits des optischen Mediums (OM) angeordnet sind, wobei die Meßsender (SL, SR) und die Empfänger (EL, ER) an jeweils einen Lichtwellenleiter (LW1, LW2) angekoppelt werden und Messungen von beiden Seiten des optischen Mediums (OM) her durchgeführt werden, wobei jeweils nur ein Empfänger (ER) angekoppelt wird und dabei der jeweils andere Empfänger (EL) nicht angekoppelt ist, wobei die beiden Meßsender (SL, SR) aktiviert werden und eine erste Messung mit dem jeweils angekoppelten Empfänger (ER) ausgeführt wird, wobei anschließend der bisher angekoppelte Empfänger (ER) abgekoppelt und der andere Empfänger (EL) angekoppelt wird und eine zweite Messung ausgeführt wird, die von den Sendesignalen (P100, P200) der beiden Meßsender (SL, SR) hergeleitet ist,
   **dadurch gekennzeichnet,**
   daß zur Verringerung des Einflusses nichtlinearer Vorgänge auf die Meßgenauigkeit für die erste Messung der zeitliche Verlauf (CP1, CP2) des Empfangspegels (P101(t), P201(t)) der empfangenen Signale (P100, P200) der beiden Meßsender (SL, SR) durch die Bildung jeweils einer ersten Meßreihe von aufeinanderfolgenden Meßwerten - z.B. y1=P101(0), y2=P101(1), ..., y4=P101(3), y5=P201(4), ...,y8=P201(7) - innerhalb kurzer zeitlicher Abstände - z.B. t=0s, 1s, 2s, 3s, ..., 7s - während einer ersten Meßzeit (tm1, tm2) erfaßt wird, daß für die zweite Messung der zeitliche Verlauf des Empfangspegels (P102(t), P202(t)) der empfangenen Signale (P100, P200) der beiden Meßsender (SL, SR) durch Bildung jeweils einer zweiten Meßreihe von aufeinanderfolgenden Meßwerten- z.B. P102(0), P102(1), P102(2), P102(3); P202(4), ..., P202(7) -innerhalb kurzer zeitlicher Abstände - z.B. t=0s, 1s, 2s, ..., 7s -während einer zweiten Meßzeit erfaßt wird, und daß für die Dämpfungsberechnung (a) diese Meßreihen von aufeinanderfolgenden Meßwerten - z.B. P101(0) - P101(3); P201(4) - P201(7); P102(0) - P102(3); P202(4) - P202(7) -herangezogen werden.

2. Verfahren nach Anspruch 1,
   **dadurch gekennzeichnet,**
   daß bei jeder Meßreihe - z.B. y1- Y4, y5-y8 -zuerst für einige Zeit - z.B. tm1 -nur mit einem Meßsender - z.B. SR - und dann für einige Zeit - z.B. tm2 - nur mit dem zweiten Meßsender -z.B. SL - gearbeitet wird.

3. Verfahren nach Anspruch 1,
   **dadurch gekennzeichnet,**
   daß die beiden Meßsender (SR, SL) abwechselnd aktiviert werden derart, daß innerhalb einer Meßreihe - z.B.: y1-y4, y5-y8 - zeitlich verschachtelt Empfangspegel - z.B. P101(0), P201(1), P(101(2), P201(3), P101(4), P201(5), ...;P102(0), P202(1), P102(2), P202(3), P102(4) , P202(5),... -der empfangenen Meßsignale (P100, P200) des einen und des anderen Senders (SL; SR) erhalten werden.

4. Verfahren nach Anspruch 3,
   **dadurch gekennzeichnet,**
   daß aus zwei aufeinanderfolgenden Meßwerten- z.B. P101(0), P101(2) - einer Meßreihe - z.B. CP1 -, die auf einen Meßsender - z.B. SR - zurückgehen, ein neuer Meßwert - z.B. P101(1) - durch Interpolation gebildet wird, und daß dieser durch Interpolation gefundene Meßwert für die Berechnung der Dämpfung (a) dem zeitlich zwischen den beiden erstgenannten Meßwerten gewonnenen Meßwert - z.B. P201(1) - des jeweils anderen Meßsenders (SL) zugeordnet wird.

5. Einrichtung zur Durchführung des Verfahrens nach einem der vorhergehenden Ansprüche,
   **dadurch gekennzeichnet,**
   daß den Meßsendern (SL, SR) und Empfängern (EL, ER) Schaltungselemente (z.B. OS, US1, US2) derart zugeordnet sind, daß im Betrieb zur Verringerung des Einflusses nichtlinearer Vorgänge auf die Meßgenauigkeit für die erste Messung der zeitliche Verlauf (CP1, CP2) des Empfangspegels (P101(t), P201(t)) der empfangenen Signale (P100, P200) der beiden Meßsender (SL, SR) durch die Bildung jeweils einer ersten Meßreihe von aufeinanderfolgenden Meßwerten - z.B. y1=P101(0), y2=P101(1), ..., y4=P101(3); y5=P201(4), ...,y8=P201(7) - innerhalb kurzer zeitlicher Abstände - z.B. t=0s, 1s, 2s, 3s, ..., 7s - während einer ersten Meßzeit (tm1, tm2) von dem jeweils einen angekoppelten Empfänger (EL) erfaßt wird, daß für die zweite Messung der zeitliche Verlauf des Empfangspegels (P102(t), P202(t)) der empfangenen Signale (P100, P200) der beiden Meßsender (SL, SR) durch Bildung jeweils einer zweiten Meßreihe von aufeinanderfolgenden Meßwerten - z.B. P102(0), P102(1), P102(2), P102(3); P202(4), ..., P202(7) - innerhalb kurzer zeitlicher Abstände - z.B. t=0s, 1s, 2s,..., 7s - während einer zweiten Meßzeit von dem zweiten Empfänger (ER) erfaßt wird, und daß für die Dämpfungsberechnung (a) diese Meßreihen von aufeinanderfolgenden Meßwerten - z.B. P101(0) - P101(3); P201(4) - P201(7); P102(0) - P102(3); P202(4) - P202(7) herangezogen werden.

6. Einrichtung nach Anspruch 5,
**dadurch gekennzeichnet,**
daß in jedem Empfänger (EL, ER) jeweils zwei Fotodioden (EDR2, EDL2; EDR1, EDL1) angeordnet sind, die jeweils Licht aus unterschiedlichen Richtungen aufnehmen.

7. Einrichtung nach Anspruch 6,
**dadurch gekennzeichnet,**
daß die Fotodioden (EDR2, EDL2; EDR1, EDL1) mit ihren elektrischen Anschlüssen getrennt herausgeführt und einzeln zu ihren Signalwerten abtastbar sind.

8. Einrichtung nach einem der Ansprüche 6 oder 7,
**dadurch gekennzeichnet,**
daß jeder Fotodiode (EDR2, EDL2; EDR1, EDL1) ein eigener Verstärker (VER2, VEL2; VER1, VEL1) zugeordnet ist.

9. Einrichtung nach einem der Ansprüche 5 mit 8,
**dadurch gekennzeichnet,**
daß die Meßsender (SL, SR) getrennt aktivierbar sind.

10. Einrichtung nach einem der Ansprüche 5 mit 9,
**dadurch gekennzeichnet,**
daß eine zentrale Taktversorgung (OS) vorgesehen ist, welche die Aktivierung der Meßsender (SL, SR) und/oder die Ankopplung der Empfänger (EL, ER) steuert.

## Claims

1. Method for measuring the optical attenuation (a) of an optical medium (OM), using two measurement transmitters (SL, SR) and two receivers (EL, ER), which are arranged on both sides of the optical medium (OM), the measurement transmitters (SL, SR) and the receivers (EL, ER) being in each case coupled to an optical waveguide (LW1, LW2) and measurements being carried out from both sides of the optical medium (OM), in each case only one receiver (ER) being coupled and the respective other receiver (EL) not being coupled, the two measurement transmitters (SL, SR) being activated and a first measurement being carried out with the respectively coupled receiver (ER), the previously coupled receiver (ER) being subsequently uncoupled and the other receiver (EL) being coupled and a second measurement being carried out, which is derived from the transmission signals (P100, P200) of the two measurement transmitters (SL, SR), characterized in that, to reduce the influence of non-linear processes on the measurement accuracy, for the first measurement, the variation with time (CP1, CP2) of the receiving level (P101(t), P201(t)) of the received signals (P100, P200) from the two measurement transmitters (SL, SR) is registered by means of forming in each case a first measurement series of successive measured values - e.g. y1=P101(0), y2=P101(1), ..., y4=P101(3), y5=P201(4), ..., y8=P201(7) - within short time intervals - e.g. t=0s, 1s, 2s, 3s, ., 7s - during a first measurement time (tml, tm2), in that, for the second measurement, the variation with time of the receiving level (P102(t), P202(t)) of the received signals (P100, P200) from the two measurement transmitters (SL, SR) is registered by means of forming in each case a second measurement series of successive measured values - e.g. P102(0), P102(1), P102(2), P102(3); P202(4), .... P202(7) - within short time intervals - e.g. t=0s, 1s, 2s, ..., 7s, - during a second measurement time, and in that these measurement series of successive measured values - e.g. P101(0) - P101(3); P201(4) - P201(7); P102(0) - P102(3); P202(4) -P202(7) - are used for the calculation of the attenuation (a).

2. Method according to Claim 1, characterized in that in each measurement series - e.g. y1-y4, y5-y8 - operations are carried out first for some time - e.g. tm1 - with only one measurement transmitter - e.g. SR - and then for some time - e.g. tm2 - with only the second measurement transmitter - e.g. SL.

3. Method according to Claim 1, characterized in that the two measurement transmitters (SR, SL) are alternately activated in such a manner that, within one measurement series - e.g. y1-y4, y5-y8 - chronologically nested receiving levels - e.g. P101(0), P201(1), P101(2), P201(3), P101(4), P201(5), ...; P102(0), P202(1), P102(2), P202(3), P102(4), P202(5), ... - of the received measurement signals (P100, P200) are obtained from the one and the other transmitter (SL; SR).

4. Method according to Claim 3, characterized in that, from two successive measured values - e.g. P101(0), P101(2) - of one measurement series - e.g. CP1 -, which relate back to one measurement transmitter - e.g. SR -, a new measured value - e.g. P101(1) - is formed by means of interpolation, and in that this measured value found by interpolation is allocated, for the calculation of the attenuation (a), to the measured value - e.g. P201(1) -, obtained chronologically between the two first-named measured values, from the respective other measurement transmitter (SL).

5. Apparatus for carrying out the method according to one of the preceding claims, characterized in that switching elements (e.g. OS, US1, US2) are allocated to the measurement transmitters (SL, SR) and receivers (EL, ER) in such a way that, in operation, to reduce the influence of non-linear processes on the measurement accuracy, for the first measurement, the variation with time (CP1, CP2) of the receiving level (P101(t), P201(t)) of the received signals (P100, P200) from the two measurement transmitters (SL, SR) is registered by means of forming in each case a first measurement series of successive measured values - e.g. y1=P101(0), y2=P101(1), ..., y4=P101(3); y5=P201(4), ..., y8=P201(7) - within short time intervals - e.g. t=0s, 1s, 2s, 3s, ..., 7s - during a first measurement time (tml, tm2), from the one respectively coupled receiver (EL), in that, for the second measurement, the variation with time of the receiving level (P102(t), P202(t)) of the received signals (P100, P200) from the two measurement transmitters (SL, SR) is registered by means of forming in each case a second measurement series of successive measured values - e.g. P102(0), P102(1), P102(2), P102(3); P202(4), ..., P202(7) - within short time intervals - e.g. t=0s, 1s, 2s, ..., 7s, - during a second measurement time, from the second receiver (ER), and in that these measurement series of successive measured values - e.g. P101(0) - P101(3); P201(4) - P201(7); P102(0) - P102(3); P202(4) -P202(7) - are used for the calculation of the attenuation (a).

6. Apparatus according to Claim 5, characterized in that in each receiver (EL, ER) in each case, two photodiodes (EDR2, EDL2; EDR1, EDL1) are arranged, which in each case pick up light from different directions.

7. Apparatus according to Claim 6, characterized in that the photodiodes (EDR2, EDL2; EDR1, EDL1) have their electrical connections led out separately and can be individually sampled for their signal values.

8. Apparatus according to Claim 6 or 7, characterized in that a dedicated amplifier (VER2, VEL2; VER1, VEL1) is allocated to each photodiode (EDR2, EDL2; EDR1, EDL1).

9. Apparatus according to one of Claims 5 to 8, characterized in that the measurement transmitters (SL, SR) can be activated separately.

10. Apparatus according to one of Claims 5 to 9, characterized in that a central clock pulse supply (OS) is provided, which controls the activation of the measurement transmitters (SL, SR) and/or the coupling of the receivers (EL, ER).

## Revendications

1. Procédé de mesure de l'atténuation optique (a) d'un milieu optique (OM) en utilisant deux émetteurs de mesure (SL, SR) et deux récepteurs (EL, ER), qui sont disposés de part et d'autre du milieu optique (OM), les émetteurs de mesure (SL,SR) et les récepteurs (EL,ER) étant couplés à des guides d'ondes lumineuses respectifs (LW1, LW2) et des mesures étant effectuées de part et d'autre du milieu optique (OM), seul un récepteur (ER) étant couplé et l'autre récepteur respectif (EL) n'étant pas couplé, les deux émetteurs de mesure (SL, SR) étant activés et une première mesure étant effectuée avec le récepteur (ER) couplé, et ensuite le récepteur (ER) couplé jusqu'alors est découplé et l'autre récepteur (EL) est couplé, et une seconde mesure est effectuée, à partir des signaux d'émission (P100, P200) des deux émetteurs de mesure (SL, SR), caractérisé par le fait que pour réduire l'influence de processus non linéaires sur la précision de mesure, on enregistre, pour la première mesure, la variation dans le temps (CP1,CP2) du niveau de réception (P101(t), P201(t)) des signaux reçus (P100, P200) des deux émetteurs de mesure (SL, SR), en formant respectivement une première série de valeurs de mesure successives - par exemple y1=P101(0), y2=P101(1), ..., y4=P101(3), y5=P201(4), ..., y8=P201(7) - pendant de brefs intervalles de temps - par exemple t=0s, 1s, 2s, 3s,..., 7s - pendant un premier intervalle de temps de mesure (tm1, tm2), on enregistre, pour la seconde mesure, une variation dans le temps du niveau de réception (P102(t), P202 (t)) des signaux reçus (P100, P200) des deux émetteurs de mesure (SL, SR) en formant respectivement une seconde série de valeurs de mesure successives - par exemple P102(0), P102(1), P102(2), P102(3); P202(4), ..., P202(7) - pendant de brefs intervalles de temps, par exemple t=0s, 1s, 2s, ..., 7s - pendant un second intervalle de temps de mesure, et que pour le calcul (a) de l'atténuation, on tire parti de ces séries de valeurs de mesure successives - par exemple P101(0) - P101(3); P201(4) - P201(7); P102(0) - P102(3); P202(4) - P202(7).

2. Procédé suivant la revendication 1, caractérisé par le fait que, pour la première série de mesures, - par exemple y1-y4, y5-y8 - on opère tout d'abord pendant un certain temps - par exemple tm1 - seulement avec un émetteur de mesure - par exemple SR - et ensuite pendant un certain temps - par exemple tm2 - seulement avec le second émetteur de mesure - par exemple SL.

3. Procédé suivant la revendication 1, caractérisé par le fait que les deux émetteurs de mesure (S1, S5) sont activés en alternance de telle sorte que pendant une série de mesures - par exemple : y1-y4 y5-y8 - on obtient des niveaux de réception imbriqués dans le temps - par exemple P101(0), P201(1) , P(101(2), P201(3), P101(4), P201(5), ...; P102(0), P202(1), P102(2), P202(3), P102(4), P202(5), ... - des signaux de mesure reçus (P100, P200) d'un émetteur et de l'autre émetteur (SL; SR).

4. Procédé suivant la revendication 3, caractérisé par le fait qu'à partir de deux valeurs de mesure successives - par exemple P101(0), P101(2) - d'une série de mesures - par exemple CP1 -, qui sont fournies par un émetteur de mesure - par exemple SR -, on forme une nouvelle valeur de mesure (par exemple P101(1) - par interpolation et qu'on associe cette valeur de mesure, trouvée par interpolation, pour le calcul de l'atténuation (a), à la valeur de mesure - par exemple P201(1), obtenue dans le temps entre les deux valeurs de mesure indiquées en premier lieu, de l'autre émetteur de mesure respectif (SL).

5. Dispositif pour la mise en oeuvre du procédé suivant l'une des revendications précédentes, caractérisé par le fait que des éléments de circuit (par exemple OS, US1, US2) sont associés aux émetteurs de mesure (SL, SR) et aux récepteurs (EL, ER) de telle sorte qu'en fonctionnement, pour réduire l'influence de processus non linéaires sur la précision de mesure, pour la première mesure, la variation dans le temps (CP1,CP2) du niveau de réception (P101(t), P201(t)) des signaux reçus (P100, P200) des deux émetteurs de mesure (SL, SR) est, en formant respectivement une première série de valeurs de mesure successives - par exemple y1=P101(0), y2=P101(1), ..., y4=P101(3); y5=P201(4), ..., y8=P201(7) - pendant de brefs intervalles de temps - par exemple t=0s, 1s, 2s, 3s,..., 7s - enregistrée respectivement par le récepteur (EL) couplé, pendant un premier intervalle de temps de mesure (tml, tm2), que pour la seconde mesure la variation dans le temps du niveau de réception (P102(t), P202(t)) des signaux reçus (P100, P200) des deux émetteurs de mesure (SL, SR) est, en formant respectivement une seconde série de valeurs de mesure successives - par exemple P102(0), P102(1), P102(2), P102(3); P202(4), ..., P202(7) - pendant de brefs intervalles de temps, par exemple t=0s, 1s, 2s, ..., 7s - enregistrée par le second récepteur (ER) pendant un second intervalle de temps de mesure, et que pour le calcul (a) de l'atténuation, on tire parti de ces séries de valeurs de mesure successives - par exemple P101(0) - P101(3); P201(4) - P201(7); P102(0) - P102(3); P202(4) - P202(7).

6. Dispositif suivant la revendication 5, caractérisé par le fait que dans chaque récepteur (EL, ER) sont disposées respectivement deux photodiodes (EDR2, EDL2; EDR1, EDL1), qui reçoivent respectivement de la lumière dans des directions différentes.

7. Dispositif suivant la revendication 6, caractérisé par le fait que les bornes électriques des photodiodes (EDR2, EDL2; EDR1, EDL1) sortent séparément et que les valeurs de signaux de ces photodiodes peuvent être explorées individuellement.

8. Dispositif suivant l'une des revendications 6 ou 7, caractérisé par le fait qu'un amplificateur propre (VER2, VEL2; VER1, VEL1) est associé à chaque photodiode (EDR2, EDL2; EDR1, EDL1).

9. Dispositif suivant l'une des revendications 5 à 8, caractérisé par le fait que les émetteurs de mesure (SL, SR) peuvent être activés séparément.

10. Dispositif suivant l'une des revendications 5 à 9, caractérisé par le fait qu'il est prévu une unité centrale d'alimentation en cadence (OS), qui commande l'activation des émetteurs de mesure (SL, SR) et/ou le couplage des récepteurs (EL, ER).

# FIG 1

FIG 2

FIG 3

# F I G 4

# FIG 5

# FIG 6